# EUROPÄISCHE PATENTSCHRIFT

(11) **EP 0 769 705 B1**
(45) Veröffentlichungstag und Bekanntmachung des Hinweises auf die Patenterteilung: **24.05.2000**
(21) Anmeldenummer: 96115787.2
(22) Anmeldetag: 02.10.1996
(51) Int. Cl.: G01S 7/41

(54) **Verfahren und Anordnung zur Steuerung eines Multifunktionsradars**
Method and apparatus for control of a multifunction radar
Méthode et appareil pour contrôler un radar multifonctionnel

(30) Priorität: 19.10.1995 DE 19538885
(43) Veröffentlichungstag der Anmeldung: 23.04.1997
(73) Patentinhaber: DaimlerChrysler Aerospace AG, 81663 München (DE)
(72) Erfinder: Hommel, Hans, 88455 Baindt (DE); Patzwahl, Manfred, 89081 Ulm (DE); Schroer, Wolfgang, Prof.Dr., 89081 Ulm (DE)
(74) Vertreter: Straub, Bernd

(56) Entgegenhaltungen:
- US-A- 5 068 664
- US-A- 5 289 563
- US-A- 5 457 460
- PROCEEDINGS 1988 IEEE NATIONAL RADAR CONFERENCE, - 21.April 1988 ANN ARBOR MICHIGAN USA, Seiten 157-164, XP002021794 VANNICOLLA ET AL: "Applications of knowledge based systems to surveillance"

## Beschreibung

Die Erfindung betrifft ein Verfahren zur Steuerung eines Multifunktionsradars nach dem Patentanspruch 1 und eine Anordnung zur Durchführung des Verfahrens nach dem Patentanspruch 8.

Mit einem Multifunktionsradar lassen sich mehrere (Radar-) Ziele gleichzeitig (simultan) überwachen, auch wenn sie räumlich getrennt sind, das heißt, sich in unterschiedlichen Radar-Zellen befinden. Diesen sind unterschiedliche Azimut- und/oder Elevationswinkel und/oder Entfernungen zugeordnet. Jedes Ziel kann mit einem daran angepaßten Radar-Modus erfaßt und/oder klassifiziert werden.

Beispielsweise ist es möglich, das Multifunktionsradar zunächst in einem Such-Mode zu betreiben, mit welchem in einem vorgebbaren Suchraum lediglich die Anwesenheit eines Zieles ermittelt wird. Wird in dem Suchraum ein Ziel entdeckt (detektiert), so kann auf einen Track-Mode (Spurverfolgungs-Mode) umgeschaltet werden, um beispielsweise von einem Flugkörper dessen Spur (Azimut-, Elevationswinkel, Entfernung, Geschwindigkeit sowie deren zeitliche und richtungsabhängige Änderungen) zu ermitteln. Ein Multifunktionsradar enthält als wesentlichen Bestandteil eine phasengesteuerte Sende-/Empfangs-Antenne ("phased array antenna") sowie eine zugehörige Steuereinheit. Die Antenne enthält eine Vielzahl von Sende-/Empfangs-Strahlerelementen, die von der Steuereinheit gesteuert werden. Mit dieser Kombination kann nahezu zeitlich verzögerungsfrei auf unterschiedliche Betriebsweisen umgeschaltet werden, beispielsweise kann das Sende-/Empfangs-Richtdiagramm an den Radar-Modus angepaßt werden und/oder es können die Reichweite sowie die Pulsfolgefrequenz ("PRF-Frequenz") geändert werden.

Es ist ersichtlich, daß jedem Radar-Modus eine unterschiedliche Auslastung der Steuereinheit zugeordnet werden kann. Beispielsweise können in Abhängigkeit von der technischen Ausgestaltung der Antenne sowie der Steuereinheit im Such-Mode eine Vielzahl von Zielen detektiert werden. Im Track-Mode kann dagegen lediglich eine geringe Anzahl von Zielen verfolgt werden. Bei einer vorgegebenen Viel-Ziel-Situation (im Such-Mode) muß daher eine Bedienperson (Nutzer) entscheiden, welches der Ziele beispielsweise im Track-Mode weiterverfolgt werden muß, um eine Bedrohungssituation, beispsielsweise eine Kollision, abzuwenden. Dabei kann es ersichtlich zu Fehlentscheidungen kommen.

Aus der Literatur (Vannicolla et al, Proc. 1988 IEEE Nat. Radar Conf., Ann Arbor MI, pp. 157-164) ist ein Verfahren bekannt, das den von einem Radarsystem detektierten Zielen unterschiedliche Objektklassen und entsprechend ihrer Position unterschiedlichen Bedrohungspotentialen zuordnet. Ein Expertensystem bestimmt dann mittels einer Tabelle für jedes Objekt eine auf den aktuellen Betriebsmodus des Radarsystems bezogene Bearbeitungspriorität.

Der Erfindung liegt die Aufgabe zugrunde, ein gattungsgemäßes Verfahren anzugeben, mit dem bei einem technisch vorgegebenen Multifunktionsradar dessen optimale Auslastung ermöglicht wird, insbesondere bei einer Viel-Ziel-Situation.

Der Erfindung liegt außerdem die Aufgabe zugrunde, eine Anordnung zur Durchführung des Verfahrens anzugeben.

Diese Aufgabe wird gelöst durch alle angegebenen Merkmale der Patentansprüche 1 und 8.

Vorteilhafte Ausgestaltungen und/oder Weiterbildungen sind den weiteren Ansprüchen entnehmbar.

Ein erster Vorteil der Erfindung besteht darin, daß die Arbeitsweise eines vorgegebenen Multifunktionsradars individuell an eine vorhandene Bedrohungssituation angepaßt werden kann. Dabei können sehr große Unterschiede auftreten. So sind beispielsweise beim Schutz eines Atomkraftwerkes vor zufällig oder absichtlich darauf gerichteten Flugkörpern völlig andere Bedingungen vorhanden als bei einer militärischen Bedrohung, wo die Art des Zieles, z.B. Flugzeug, Geschoß oder Rakete, zunächst unbekannt ist. Außerdem ist unbekannt, ob es sich bei dem erfaßten Ziel überhaupt um eine Bedrohung handelt, welche abgewehrt werden muß.

Ein zweiter Vorteil besteht darin, daß erfaßten Zielen unterschiedliche vorgebbare Prioritäten, z.B. klein, mittel, hoch, sehr hoch, zugeordnet werden, und daß jedes Ziel in Abhängigkeit von seiner Priorität behandelt wird. Es wird außerdem gemeldet, ob und wie die Behandlung eines Zieles abgeschlossen wird, so daß diese beispielsweise in eine geringere Priorität zurückgestuft werden kann, wodurch das Multifunktionsradar entlastet wird und für weitere Zielauswertungen verfügbar ist.

Weitere Vorteile ergeben sich aus der nachfolgenden Beschreibung.

Die Erfindung wird im folgenden anhand eines Ausführungsbeispiels unter Bezugnahme auf schematisch dargestellte Zeichnungen näher erläutert.

Es zeigen
- FIG. 1: ein Blockbild zur Erläuterung des Verfahrens für eine Monobeamanordnung
- FIG. 2 bis FIG. 4: schematisch dargestellte Zugehörigkeitsfunktionen.

Bei dem im folgenden beschriebenen Beispiel wird davon ausgegangen, daß ein auf dem Erdboden befindliches ziviles oder militärisches Objekt vor einer Bedrohung aus dem über dem Objekt befindlichen Luftraum geschützt werden soll. Die Bedrohung kann durch sehr unterschiedliche Flugkörper erfolgen, beispielsweise durch Flugzeuge, Geschosse sowie Raketen. Diese Flugkörper haben sehr unterschiedliche Eigenschaften und Bedrohungspotentiale. Beispielsweise kann davon ausgegangen werden, daß von einem auf das zu schützende Objekt zufliegenden Verkehrsflugzeug lediglich eine sehr geringe Bedrohung ausgeht, z.B. ein zufälliger oder beabsichtigter Absturz über dem Objekt. Von einem das Objekt anfliegenden mit scharfer Munition bewaffneten Militärflugzeug erfolgt dagegen eine wesentlich höhere Bedrohung.

Wird nun zur Ermittlung der Bedrohung des Objekts ein eingangs erläutertes Multifunktionsradar verwendet, so besitzt dieses bezüglich seiner Arbeitsweise und des über dem Objekt befindlichen Luftraums viele Freiheitsgrade, deren Beherrschung und optimaler Einsatz, insbesondere bei einer möglichen Mehrziel-Situation, einen hochqualifizierten Bediener und/oder (Radarbild-)Auswerter erfordert. So muß dieser mittels der Steuereinheit beispielsweise in Abhängigkeit von der Auslastung des Radars, das heißt, der Anzahl der gleichzeitig zu beobachtenden Ziele, ihrer Bedrohlichkeit, der auf jedes Ziel abgestimmten Radar-Funktion (Radar-Modus) sowie weiterer gleichzeitig durchzuführenden Überwachungsaufträge, z.B. Suchmodi, für den zu überwachenden Luftraum die zugehörige Raumausleuchtung steuern, das heißt, die zeitabhängige Anzahl (Sequenz) der Strahlschwenkungen (Schwenkungen der Sende-/Empfangskeule) und die Verweildauer der Sende-/Empfangskeule (Sende-Empfangsrichtdiagramm) in jeder erfaßten (ausgeleuchteten) Radar-Zelle (Azimut-Elevations-Zelle). Dabei sollte eine möglichst hohe funktionale Ausbeute (Zahl der gleichzeitig ausführbaren Überwachungsaufträge) erreicht werden. Hierbei sind insbesondere für Gegenmaßnahmen vorgebbare, zielabhängige Entdeckungswahrscheinlichkeiten, Zielverweildauern und Wiederholsequenzen (der Sende-/Empfangskeule) zu berücksichtigen.

Es ist ersichtlich, daß von dem Bediener und/oder Auswerter ein hohes Wissen sowie eine umfangreiche Erfahrung verlangt werden, da bei der Bewertung eines erfaßten Zieles auch sehr unscharfe Begriffe verwendet werden.

So ist beispielsweise der Begriff Bedrohung (Bedrohlichkeit) ein unscharfer Begriff, denn bei einem bewaffneten Flugzeug müssen beispielsweise die Parameter
- Spur (Flugweg) des Flugzeugs
- Entfernung (Zielentfernung) des Flugzeugs
- Art der Bewaffnung, z.B. Raketen oder Bomben
- Reichweite der Waffen
mittels der Erfahrung (Expertenwissen) des Bedieners bewertet werden. Da von diesen Parametern nur die Spur sowie die Entfernung eines (Radar-)Ziels mittels eines Multifunktionsradars genau meßbar sind, kann der Bediener für die von einem (Radar-)Ziel ausgehende Berohung als ganzes nur unscharfe Aussagen (Attribute) wie "Stark", "Mittel", "Gering" erarbeiten, dem (Radar-)Ziel diese Attribute zuordnen und gegebenenfalls weitere Maßnahmen veranlassen, beispielsweise ein (Radar-)Ziel nicht mehr zu beachten, wenn das Attribut "Mittel" nach einer vorgebbaren Zeit lediglich noch "Gering" ist.

Bei der Erfindung wird nun ausgenutzt, daß derart unscharfe Begriffe sowie Aussagen (Attribute) mittels der bekannten Fuzzy Set Theorie ("Fuzzy Logik") auswertbar sind, um damit scharfe (analytische) Aussagen ("Ja-Nein-Aussagen") zu erstellen, welche technisch verarbeitet werden können, beispielsweise zur Betätigung eines Schalters. Die Anwendung der Fuzzy Set Theorie erfolgt vorzugsweise mittels einer Datenverarbeitungsanlage, mit welcher die nachfolgend beschriebene adaptive Steuerung für das Multifunktionsradar herstellbar ist.

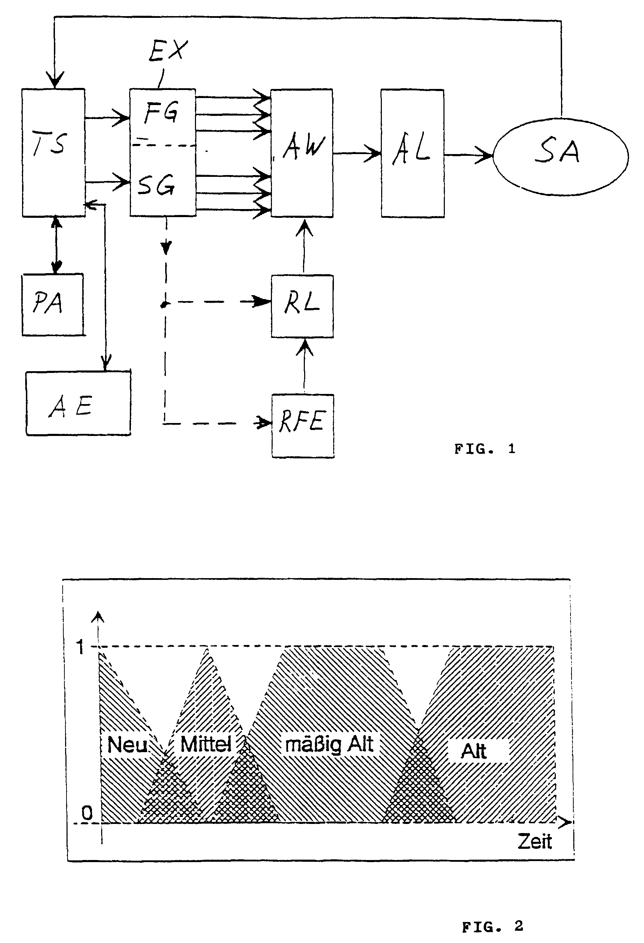

FIG. 1 zeigt ein Blockbild einer adaptiven Steuerung für ein Multifunktionsradar. Dabei wird jedem, beispielsweise im Such-Mode erfaßten (Radar-)Ziel, eine Priorität zugeordnet. Diese hat beispielsweise den unscharfen Wertebereich "Klein", "Mittel", "Hoch" sowie "Sehr Hoch" (FIG. 4). Bei der Erfindung wird nun immer der Überwachungsauftrag, beispielsweise die Verfolgung (Track) eines Ziels, mit der höchsten Priorität ausgewählt. Das Ziel wird dann solange in diesem Radar-Modus weiterverfolgt, bis dessen Priorität kleiner wird als die eines anderen Überwachungsauftrages. Anschließend wird das nächste Ziel mit der sich nun ergebenden höchsten Priorität ausgewählt und so weiter. Es ist auch möglich, daß ein ganz bestimmtes Ziel mehrmals eine hohe Priorität erreicht. Dieses ist dann der Fall, wenn beispielsweise Information über ein Flugzeug im Track-Mode zyklisch veraltet. Mit einem solchen Verfahren wird eine optimale Auslastung des Multifunktionsradars erreicht.

Dieses Verfahren wird gemäß FIG. 1 durchgeführt mittels einer phasengesteuerten Antenne PA, die eine Auswerteeinheit zur Erzeugung eines in der Radartechnik üblichen Videosignals enthält sowie eine Steuereinheit zur Formung der Sende-/Empfangskeule, deren Ablenkung, sowie zur Einstellung der gewünschten Radar-Modi. Aus dem Videosignal sowie der Einstellung der Antenne PA wird, z.B. mittels eines Datenspeichers, für die erfaßten (Radar-)Ziele ein Abbild der taktischen Situation TS erzeugt. Dieses enthält beispielsweise die Anzahl der Ziele, deren Azimut- und Elevationswinkel, deren Entfernung sowie deren Spur sowie eine Identifizierung (Freund-Feind-Kennung). Aus dem Abbild der taktischen Situation TS werden dann in einer Extraktionseinheit EX sowohl funktional definierte Größen FG (meßbare Größen) als auch sprachlich definierte Größen SG ermittelt. Letztere sind die in der Fuzzy Set Theorie üblichen Eingangsgrößen, die an den Anwendungsfall der (Radar-)Ziel-Auswertung angepaßt sind und vorzugsweise mittels eines sogenannten Expertensystems ermittelt werden. Die Größen FG, SG werden einer Auswerteeinheit AW zugleitet und außerdem Informationen aus einer Radar-Bibliothek RL sowie einem Regeln- und Funktionen-Editor RFE.

In der Radar-Bibliothek RL sind den (Radar-)Zielen entsprechende Daten gespeichert, beispielsweise alle Flugzeugtypen, die in einem vorgebbaren Geschwindigkeitsbereich fliegen können, sowie deren Eigenschaften, z.B. Bewaffnung.

In dem Regeln- und Funktions-Editor RFE sind der Fuzzy Set Theorie entsprechende Regeln, z.B. sogenannte "Wenn ... Dann ..."-Regeln gespeichert. Diese werden erstellt z.B. anhand des Expertenwissens mindestens eines erfahrenen Bedieners.

Die in der Radar-Bibliothek RL sowie dem Regeln- und Funktions-Editor RFE gespeicherten Daten sowie Regeln werden abgerufen (aktiviert) nach Maßgabe der von der Extraktionseinheit EX ermittelten Größen FG, SG. Dieses ist in FIG. 1 durch gestrichelte Linien dargestellt.

Aus den beschriebenen Informationen, Daten und Regeln, welche der Auswerteeinheit AW zugeführt werden, erzeugt diese, in nachfolgend noch näher erläuterter Weise, für die erfaßten (Radar-)Ziele eine priorisierte Auftragsliste AL, das heißt eine Wertung der Überwachungsaufträge entsprechend vorgebbaren Kriterien. Diese Auftragsliste AL wird dann von der Multifunktions-Radaranlage RA abgearbeitet, beispielsweise entsprechend deren Kapazitäten (Verarbeitungsgeschwindigkeit) in einer in der Radartechnologie üblichen sequentiellen Abarbeitung SA für eine Monobeam-Antennenanordnung. Damit wird dann das bei der taktischen Situation TS erfaßte (Radar-)Ziel mit der höchsten Priorität ausgewählt und entsprechend einem daran angepaßten vorgebbaren Radar-Modus, z.B. dem Track-Modus, von der Radar-Antenne PA weiterverfolgt.

Die taktische Situation TS kann außerdem beeinflußt werden durch eine Alarm- und/oder Abwehreinrichtung AE. Diese kann sehr vielseitig gestaltet sein, beispielsweise als Funkstrecke, mit der ein Flugzeug aufgefordert wird, einen vorgebbaren Flugbereich und/oder Flugweg zu verlassen und/ oder eine militärische Einrichtung, z.B. ein Feuerleitstand, mit dessen Hilfe eine Bedrohung angewendet werden kann.

Bei dem beschriebenen Beispiel für eine Radar-Antenne mit Monobeam-Anordnung ist die beschriebene sequentielle Abarbeitung SA erforderlich. Dabei wird die Auftragsliste AL (Zielliste) zyklisch erneuert. Werden nun in der Auftragsliste AL vorhandene Aufträge aufgrund niedriger Priorität bei hoher Belastung des Radars zurückgestellt, so wächst die Priorität dieser Aufträge während der Wartezeit, bis sie eine für die Abarbeitung geeignete Priorität erreicht haben.

Es ist ersichtlich, daß das beschriebene Verfahren vorteilhafterweise in vielfältiger und kostengünstiger Weise an die technischen Eigenschaften der Radar-Antenne RA anpaßbar ist, insbesondere dann, wenn das Verfahren mittels einer Datenverarbeitungsanlage durchgeführt wird. Dann kann beispielsweise bei Verwendung einer Radar-Antenne mit Multibeamanordnung zumindest eine teilweise parallele Abarbeitung der Auftragsliste AL erfolgen. In einem solchen Fall müßte lediglich die Art der sequentiellen Abarbeitung SA geändert werden.

Im folgenden wird die Erstellung der priorisierten Auftragsliste AL näher erläutert. Dabei ist jedem Auftrag (für die Radar-Antenne PA) ein Auftragstyp zugeordnet, der an die technischen Eigenschaften und/oder Möglichkeiten, z.B. Such-Mode, Track-Mode, Zielidentifizierung (Freund-Feind-Kennung) sowie Nah- und Fernbereichs-Umschaltung, der Radar-Antenne PA angepaßt ist. Im folgenden wird bei der Priorisierung beispielsweise zwischen folgenden Haupt-Auftragstypen unterschieden:
- Such-Mode
- Track-Mode
- Ziel-Auswertung (Ziel-Identifizierung)
- Beauftragung der Alarm- und/oder Abwehreinrichtung
- Sonstiges.

Jeder Auftrag wird mit einer Azimut-/Elevationszelle (Beamposition) verknüpft. Bei zielspezifischen Aufträgen ergibt sich diese aus den Zieldaten, bei Suchaufträgen aus einer vorgebbaren Suchsequenz. Zu jedem Auftragstyp gehören vorgebbare Kriterien, die für die Beurteilung der Priorität geeignet sind. Solche Kriterien sind beispielsweise
- Takt(Clock) =: Zähler für jeden Auftrag, der nach jedem Priorisierungszyklus um eins erhöht wird
- Rausch-Pegel =: momentaner Rausch-Pegel (Noiselevel) in verschiedenen, vorgebbaren Frequenzbändern
- Winkel-Pos. =: Winkelposition eines oder mehrerer erfaßter (Radar-)Ziele
- Winkel-Ges. =: Winkelgeschwindigkeit eines oder mehrerer erfaßter (Radar-)Ziele
- Track Quality =: Genauigkeit eines vorhandenen Tracks
- Entfernung =: Abstand zwischen dem Ziel und dem Radar
- aktuelle Prio. =: momentan gültige Priorität eines Auftrages.

Aus diesen Kriterien, den in der Radar-Bibliothek RL gespeicherten (Flugkörper-)Daten sowie den in dem Regeln-und Funktionsen-Editor RFE gespeicherten Regeln wird in der Auswerteeinheit AW jedem Auftrag eine Priorität zugeordnet. Dabei wird für die Priorisierung der (Beam-)Aufträge eine (Fuzzy Set Theorie-)Regelbasis verwendet.

In dieser Regelbasis wird das taktische Expertenwissen in Form von Entscheidungsregeln niedergelegt. Durch einen geeigneten Editor kann die Regelbasis ständig aktualisiert und auftragsabhängig formuliert werden.

Die Eingangsdaten der Regelbasis sind beispielsweise folgende Zieldaten und Umgebungscharakteristika:
- Auftragstypus
- Zeit seit Auftragsdefinition und Zeit seit der letzten Bearbeitung
- Auftragsphase
- Zieltyp und Bedrohungsverhalten
- Zielposition und -Geschwindigkeit
- Annäherungsverhalten
- Signal/Rauschverhältnis
- Signal/Clutterverhältnis
- Winkeldynamik
- Trackqualität.

Das Erebnis der regelbasierten Auswertung ist die Priorität jedes einzelnen Auftrages. Der Auftrag mit höchster Priorität wird ausgeführt. Die Priorisierung der Auftragsliste wird laufend aktualisiert.

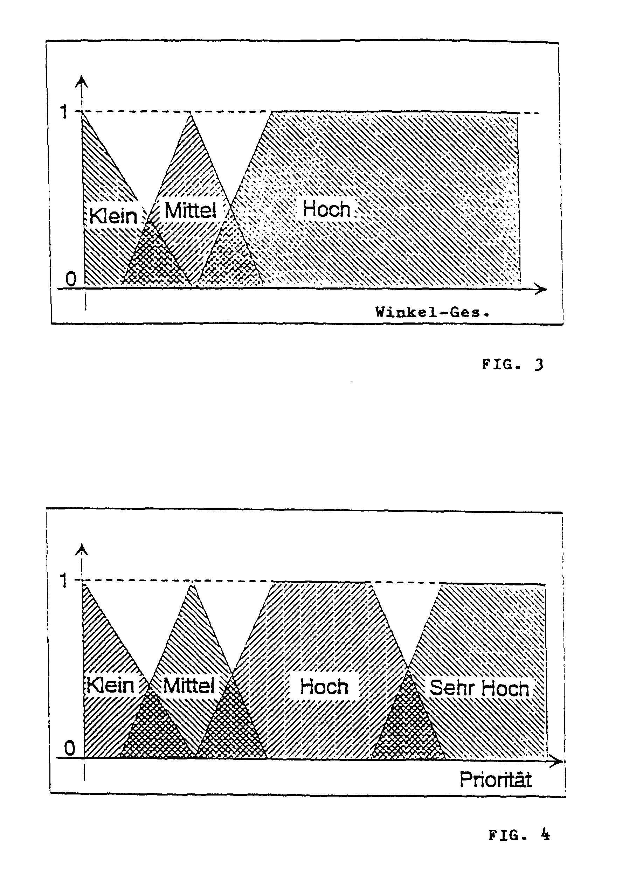

Für die Prioritätsermittlung eines komplexen Multiparameterszenarios gibt es keine funktionale Methodik. Entweder sind die Eingangsdaten unscharf oder beinhalten vages Wissen (z.B. Bedrohungsstatus) oder aber die Konsequenzen lassen sich nicht als Funktional formulieren, sondern stellen mehr oder weniger unscharf beschreibbare Anweisungen dar. Zur Auswertung der Regelbasis wird deshalb auf Methoden der Fuzzy Set Theorie zurückgegriffen. Die mit den unscharfen Begriffen assoziierten Inhalte werden vom Systemnutzer über Zugehörigkeitsfunktionen definiert. Diese sind in den FIG. 2 bis 4 dargestellt, beispielsweise für die Kriterien Takt (Clock) in FIG. 2, Winkelgeschwindigkeit in FIG. 3 sowie die Priorität in FIG. 4. So kann beispielsweise gemäß FIG. 2 ein erfaßtes Ziel neu oder mittel alt oder mäßig alt oder alt sein. Die (gleitenden) Übergänge zwischen diesen Aussagen werden durch die Zugehörigkeitsfunktion, die z.B. dreieckförmig ist, ermittelt, z.B. durch Expertenwissen festgelegt.

Die Regeln verwenden die so definierten sprachlichen Variablen und bilden sie auf die sprachliche Ausgangsvariable "Priorität" ab. Das scharfe Endergebnis ergibt sich aus der Defuzzifizierung, die in der Fuzzy Set Theorie üblich ist.

Die Regeln kennen aufgrund von Expertenwissen eines Bedieners folgendermaßen erstellt werden:

Eine Regel für einen Suchauftrag könnte z.B. lauten:
**Wenn**
Auftragsphase = Einsatgebiet erreicht und
Zielposition = Zielerwartung und Alter des Suchauftrages = mäßig
**dann**
Priorität = hoch

Eine Regel für einen Trackauftrag könnten z.B. lauten:
**Wenn**
Auftragsphase = Alarm beabsichtigt und
Zielentfernung = kritisch und
Trackqualität = mäßig oder
Objekt-Gefährdung = vorhanden
**dann**
Priorität = sehr hoch.

Da es für diese hier aufgeführten Eingangsdaten keine funktionale Berechnungsmöglichkeit der Priorität gibt, werden Regeln mit linguistischen Variablen angewendet.

So wurde z.B. in der zweiten Regel die Zielentfernung als kritisch bezeichnet. Der Übergang von einer kritischen zu einer unkritischen Zielentfernung orientiert sich z.B. an der Waffenreichweite eines Gegners.

Die Erfindung ist nicht auf die beschriebenen Beispiele beschränkt, sondern sinngemäß in vielfältiger Weise auf weitere, sowohl militärische als auch zivile Anwendungen anwendbar, beispielsweise zur Kontrolle des Flugverkehrs über einem Flughafen.

## Patentansprüche

1. Verfahren zur Steuerung eines Multifunktionsradars, das eine phasengesteuerte Antenne besitzt, wobei mittels einer Steuereinheit zumindest die Sende-/Empfangscharakteristik der Antenne sowie ein Radarmodus eingestellt werden und
- daß mittels einer Extraktionseinheit aus der taktischen Situation zu jedem Radar-Ziel gehörenden Größen (FG,SG) einer Auswerteeinheit (AW) zugeleitet werden,
- daß der Auswerteeinheit (AW) in Abhängigkeit von den Größen (FG,SG) aus einer Radarbibliothek (RL) an die taktische Situation (TS) angepaßte Informationen und Regeln zugeleitet werden,
- daß jedem Radar-Ziel in Abhängigkeit von der Priorität ein Auftrag, der zumindest einen durch die Radar-Antenne (PA) ausführbaren Radarmodus beinhaltet, zugeordnet wird,
- daß in der Auswerteeinheit (AW) alle Aufträge in einer prioritätsorientierten Auftragsliste (AL), geordnet nach der Priorität, zusammengestellt werden,
- daß nach Maßgabe der Auftragsliste (AL) eine Abarbeitung der Aufträge erfolgt und daß die taktische Situation (TS) nach Maßgabe der abgearbeiteten Aufträge aktualisiert wird,
**dadurch gekennzeichnet,**
- daß die Extraktionseinheit (EX) aus der taktischen Situation (TS) die zu jedem Radar-Ziel gehörenden funktionalen und sprachlichen Größen (FG, SG), die in der Fuzzy Set Theorie verwendbar sind, ermittelt,
- daß die Auswerteeinheit (AW) in Abhängigkeit von den Größen (FG, SG) sowohl aus einer Radarbibliothek (RL) als auch aus einem Regeln- und Funktionen-Editor (RFE) an die taktische Situation (TS) angepaßte Informationen und Regeln zugeleitet werden,
- daß in der Auswerteeinheit (AW) entsprechend der Fuzzy Set Theorie sowie den Regeln für jedes Radar-Ziel, aus der taktischen Situation (TS) eine Priorität erarbeitet wird.

2. Verfahren nach Anspruch 1, dadurch gekennzeichnet, daß in der Radar-Bibliothek (RL) Informationen gespeichert werden, welche anhand der einem erfaßten Radar-Ziel zugeordneten Radardaten eine taktische Bewertung des Radar-Ziels ermöglichen.

3. Verfahren nach Anspruch 1 oder Anspruch 2, dadurch gekennzeichnet, daß in dem Regeln- und Funktionen-Editor (RFE) aufgrund von Expertenwissen an die zu erwartende taktische Situation und die Fuzzy Set Theorie angepaßte Regeln und Funktionen gespeichert werden.

4. Verfahren nach einem der vorhergehenden Ansprüche, dadurch gekennzeichnet, daß nach Maßgabe der Arbeitsauslastung der Radar-Antenne (PA) eine Abarbeitung der Aufträge erfolgt.

5. Verfahren nach einem der vorhergehenden Ansprüche, dadurch gekennzeichnet, daß bei einer Radar-Antenne (PA) mit Monobeamanordnung eine sequentielle Abarbeitung (SA) der prioritätsorientierten Auftragsliste (AL) erfolgt.

6. Verfahren nach einem der vorhergehenden Ansprüche, dadurch gekennzeichnet, daß die Radar-Ziele in der Umgebung eines zu schützenden Objektes erfaßt werden und daß beim Auftreten einer vorgebbaren Bedrohungssituation des Objektes durch ein Radar-Ziel eine Alarm- und/oder Abwehreinheit (AE) aktiviert wird.

7. Verfahren nach einem der vorhergehenden Ansprüche, dadurch gekennzeichnet, daß durch die Alarm- und/oder Abwehreinheit (AE) Maßnahmen ausgelöst werden, welche eine Zerstörung eines Flugkörpers, der ein bedrohliches Radar-Ziel erzeugt, ermöglichen.

8. Anordnung zur Durchführung des Verfahrens nach einem der vorhergehenden Ansprüche, dadurch gekennzeichnet,
- daß eine Datenverarbeitungsanlage, die eine Verarbeitung der Fuzzy Set Theorie entsprechenden Informationen ermöglicht, vorhanden ist und
- daß in der Datenverarbeitungsanlage zumindest ein erster Speicher zur Speicherung der Radar-en entsprechenden taktischen Situation (TS),
ein zweiter Speicher zur Speicherung einer Radar-Bibliothek (RL) ,
ein dritter Speicher zur Speicherung eines Regeln-und Funktionen-Editors (RFE) entsprechend der Fuzzy Set Theorie und
ein vierter Speicher zur Speicherung einer prioritätsorientierten Auftragsliste (AL) vorhanden ist.

## Claims

1. Method of controlling a multi-function radar which has a phase-controlled antenna, wherein at least the transmission/reception characteristic of the antenna as well as a radar mode are adjusted by means of a control unit and that
- magnitudes (FG, SG), which belong to each radar target, from the tactical situation are fed to an evaluating unit (AW) by means of an extraction unit,
- data and rules matched to the tactical situation (TS) are fed to the evaluating unit (AW) from a radar library (RL) in dependence on the magnitudes (FG, SG),
- a task which includes at least one radar mode performable by the radar antenna (PA) is assigned to each radar target in dependence on priority,
- all tasks are combined, ordered according to priority, in the evaluating unit (AW) in a priority-oriented tasks list (AL), and
- a finishing of the tasks takes place in accordance with the tasks list (AL) and the tactical situation (TS) is actualised in accordance with the tasks that are finished,
characterised in that
- the extraction unit (EX) ascertains from the tactical situation (TS) the functional and linguistic magnitudes (FG, SG) which belong to each radar target and which are usable in the Fuzzy Set Theory,
- data and rules matched to the tactical situation (TS) are fed to the evaluating unit (AW) not only from a radar library (RL), but also from a rules and functions editor (RFE) in dependence on the magnitudes (FG, SG), and
- a priority is worked out from the tactical situation (TS) in the evaluating unit (AW) in correspondence with the Fuzzy Set Theory as well as the rules for each radar target.

2. Method according to claim 1, characterised in that data, which enables a tactical evaluation of the radar target on the basis of the radar data associated with a detected radar target, is stored in the radar library (RL).

3. Method according to claim 1 or claim 2, characterised in that rules and functions matched to the anticipated tactical situation on the basis of expert knowledge and to the Fuzzy Set Theory are stored in the rules and functions editor (RFE).

4. Method according to one of the preceding claims, characterised in that a finishing of the tasks is carried out in accordance with the workload of the radar antenna (PA).

5. Method according to one of the preceding claims, characterised in that a sequential finishing (SA) of the priority-oriented tasks list (AL) is carried out in the case of a radar antenna (PA) with a mono-beam arrangement.

6. Method according to one of the preceding claims, characterised in that the radar targets are detected in the environment of an object to be protected and that on occurrence of a predeterminable threat situation for the object by the radar target and alarm and/or defence unit (AE) is activated.

7. Method according to one of the preceding claims, characterised in that measures enabling destruction of a flying body, which produces a threatening radar target, are triggered by the alarm and/or defence unit (AE).

8. Arrangement for carrying out the method according to one of the preceding claims, characterised in that
- a data processing installation, which enables a processing of data in correspondence with the Fuzzy Set Theory, is present and
- at least a first store for storage of the tactical situation (TS) corresponding to radar, a second store for storage of a radar library (RL), a third store for storage of a rules and functions editor (RFE) corresponding to the Fuzzy Set Theory and a fourth store for storage of a priority-oriented tasks list (AL) are present in the data processing installation.

## Revendications

1. Procédé pour commander un radar à fonctions multiples, qui possède une antenne dont la phase est commandée, selon lequel au moins la caractéristique d'émission/de réception de l'antenne ainsi qu'un mode du radar sont réglés au moyen d'une unité de commande, et
- des grandeurs (FG,SG) associées à chaque cible du radar sont envoyées à une unité d'exploitation (AW) au moyen d'une unité d'extraction, à partir de la situation tactique,
- des informations et des règles adaptées à la situation tactique (TS) sont envoyées à l'unité d'exploitation (AW) en fonction des grandeurs (FG,SG), à partir d'une bibliothèque (RL) du radar,
- un ordre, qui inclut au moins un mode du radar pouvant être exécuté par l'antenne (PA) du radar, est associé à chaque cible du radar, en fonction de la priorité,
- dans l'unité d'exploitation (AW) tous les ordres sont rassemblés, en étant rangés en fonction de la priorité, dans une liste d'ordres (AL) basée des priorités,
- une exécution des ordres est effectuée en fonction de la liste d'ordres (AL), et la situation tactique (TS) est actualisée en fonction des ordres exécutés,
caractérisé en ce
- que l'unité d'extraction (EX) détermine, à partir de la situation tactique (TS), les grandeurs fonctionnelles et linguistiques (FG,SG) associées à chaque cible du radar, qui sont utilisables dans la théorie des ensembles flous,
- que des informations et des règles adaptées à la situation tactique (TS) sont envoyées à l'unité d'exploitation (AW) en fonction des grandeurs (FG,SG) tirées aussi bien d'une bibliothèque (RL) du radar que d'un éditeur de règles et de fonctions (RFE),
- que dans l'unité d'exploitation (AW), une priorité est établie en fonction de la théorie des ensembles flous ainsi que des règles pour chaque cible du radar, à partir de la situation tactique (TS).

2. Procédé selon la revendication 1, caractérisé en ce que dans la bibliothèque (RL) du radar sont mémorisées des informations, qui permettent une évaluation tactique de la cible du radar sur la base des données du radar associées à une cible détectée du radar.

3. Procédé selon la revendication 1 ou la revendication 2, caractérisé en ce que des règles et fonctions adaptées à la situation tactique à laquelle on peut s'attendre, et à la théorie des ensembles flous, sont mémorisées dans l'éditeur de règles et de fonctions (RFE) sur la base de connaissances d'expert.

4. Procédé selon l'une des revendications précédentes, caractérisé en ce qu'une exécution des ordres s'effectue en fonction de la charge de travail de l'antenne (PA) du radar.

5. Procédé selon l'une des revendications précédentes, caractérisé en ce que dans le cas d'une antenne (PA) du radar possédant un dispositif à faisceau unique, une élaboration séquentielle (SA) de la liste d'ordres (AL) basée sur la priorité est effectuée.

6. Procédé selon l'une des revendications précédentes, caractérisé en ce que les cibles du radar sont détectées dans l'environnement d'un objet à protéger et que lors de l'apparition d'une situation menaçante pouvant être prédéterminée de l'objet une unité d'alarme et/ou de défense (AE) est activée par une cible du radar.

7. Procédé selon l'une des revendications précédentes, caractérisé en ce que l'unité d'alarme et/ou de défense (AE) déclenche des dispositions qui permettent une destruction d'un objet volant, qui produit une cible de radar menaçante.

8. Dispositif pour la mise en oeuvre du procédé selon l'une des revendications précédentes, caractérisé en ce
- qu'il est prévu une installation de traitement de données, qui permet un traitement des informations correspondant à la théorie des ensembles flous,
- qu'il est prévu, dans l'installation de traitement de données, au moins
une première mémoire servant à mémoriser la situation tactique correspondant au radar,
une seconde mémoire pour mémoriser une bibliothèque (RL) du radar,
une troisième mémoire pour mémoriser un éditeur de règles et de fonctions (RFE) conformément à la théorie des ensembles flous, et
une quatrième mémoire pour mémoriser une liste d'ordres (AL) basée sur la priorité.
